# EUROPEAN PATENT SPECIFICATION

(11) **EP 2 735 529 B1**
(45) Date of publication and mention of the grant of the patent: **28.10.2015**
(21) Application number: 12425185.1
(22) Date of filing: 21.11.2012
(51) Int. Cl.: B65G 29/00, B65G 47/84

(54) **Article-orienting star wheel conveyor, particularly for labelling machines**
Artikelausgerichteter Sternradförderer, insbesondere für Etikettiermaschinen
Roue convoyeuse en étoile avec orientation de l'article, notamment pour des machines à étiqueter

(43) Date of publication of application: 28.05.2014
(73) Proprietor: SIDEL S.p.A. con Socio Unico, Parma (IT)
(72) Inventor: Lo Schiavo, Ciro, 43100 Parma (IT); Miglietta, Alessandro, 43100 Parma (IT); Abelzi, Daniele, 43100 Parma (IT)
(74) Representative: D'Angelo, Fabio

(56) References cited:
- EP-A1- 2 343 255
- WO-A1-2012/130973
- DE-A1- 19 903 319
- US-A- 2 528 860
- US-A1- 2011 272 246

## Description

### TECHNICAL FIELD

The present invention is directed to a star wheel conveyor for conveying articles, especially containers, on an automated handling line, and more particularly to a star wheel conveyor configured to orient the articles according to predefined alignment conditions which take account of given process requirements.

### BACKGROUND ART

In the packaging industry, star wheel conveyors are commonly used on automated handling lines to convey articles to and from, or even within, rotary processing units performing operations such as filling, capping or labelling. For example, they may be used to receive articles from a rectilinear conveyor and to convey said articles to a rotating processing unit with a given pitch.

In general, star wheel conveyors are substantially disk shaped and define, at their periphery, a plurality of pockets arranged equally spaced around a central axis. In greater detail, star wheel conveyors typically comprise a pair of disk-like plates centred on said axis, recesses being provided in the peripheries of the disks to form said pockets for receiving the articles to be handled.

The star wheel conveyor is positioned on an automated handling line so that an article advancing along the handling line is received within a pocket as the star wheel conveyor rotates. Upon rotation of the star wheel conveyor, the article is retained within that pocket before being released at a defined point, typically to a processing unit or to a further conveyor. Each article is generally retained within a respective pocket by being supported between contact surfaces of the pocket itself and a guide rail that encircles at least part of the star wheel disks periphery.

The need is often felt for a star wheel conveyor to deliver an article to a closely-defined point within a rotary processing unit or along a path in the automated handling line. Furthermore, there are instances where not only is it important that an article follow a predetermined path and that its position in the direction of travel be accurately controlled, but also that the article be released at a predetermined angular position. This occurs, for example, in labelling operations where a label - be it a self-adhesive label or a label formed by winding and sealing a strip of labelling material around the article - needs to be placed on an article in a specific position relative to an axis of the article due to specific constraints, such as the article shape (e.g. non-cylindrical) or the presence of one or more ornamental or technical accessory requiring that the label be placed in dependency of the position of the accessory, etc.

To this purpose, the pockets of star wheel conveyors of the type described above have been equipped with article supporting mechanisms configured to hold the articles (e.g. by their neck portion, in the case of bottles) while leaving them free to rotate about their axes as they are advanced along the handling line, each pocket of the star wheel conveyor further comprising at least one engaging member, like a ratchet or tooth, adapted to engage with a corresponding lug or notch in each article so that further rotation of the article is prevented upon engagement of the engaging member with the lug or notch. In practice, rotation of articles about their axes is naturally induced because of the high rotation speed of the star wheel conveyor about its axis, which speed is imposed by productivity requirements.

Accordingly, an orienting star wheel conveyor needs to be designed specifically for a given article shape and size, so as to ensure that the engagement of the engaging member with the lug in the article results in correct orientation of the article at the release point where it is received by a processing unit, e.g. a labelling unit, for which correct orientation of the article at the release point shall result in the correct label/article alignment. Besides, in the case of labelling, the ideal release point may change, depending on the size of the article and, correspondingly, of the label size.

As a matter of fact, when designing an orienting star wheel conveyor of this type, also the arrangement of the star wheel relative to the processing unit to which articles are delivered must be taken into account, so that the engaging member is properly placed and oriented within the star wheel pocket and relative to the position of the corresponding article supporting mechanism.

As a consequence, if the final user needs to process, e.g. label, articles with different geometry and design, a processing machine needs generally to be equipped with a number of interchangeable star wheel conveyors, each of which is specifically designed to match the requirements deriving by a specific article design.

Not only does this result in significantly increased design and manufacturing costs for the processing machine producer and, consequently, for the buyer and final user, who may also be faced with storage room issues, but also it affects productivity, in that every time that different articles are to be processed, operation of the processing machine has to be interrupted for a significant reconfiguration downtime. In practice, during this time, a star wheel conveyor designed for a given article format needs to be wholly replaced by another star wheel conveyor designed for a different article format. Furthermore, even minor subsequent modifications in the article design will generally require that a brand new star wheel conveyor be designed and provided to properly process the modified articles. Document US2011/0272246A1 discloses an article-orienting star wheel conveyor according to the preamble of claim 1.

The need is therefore felt, in the art, for an article-orienting star wheel conveyor whereby the drawbacks described above can be conveniently overcome.

In particular, the need is felt for an article-orienting star wheel conveyor which may help downscale design and manufacturing costs for the processing machine producer and final user, while also significantly reducing, or virtually eliminating altogether, machine downtime.

It is therefore an object of the present invention to provide an article-orienting star wheel conveyor, which makes it possible to meet at least one of the needs mentioned above in a simple and cost-effective manner.

### DISCLOSURE OF THE INVENTION

The object identified above is achieved by the present invention, as it relates to an article-orienting star wheel conveyor according to claim 1.

### BRIEF DESCRIPTION OF THE DRAWINGS

A preferred embodiment is hereinafter disclosed for a better understanding of the present invention, by mere way of non-limitative example and with reference to the accompanying drawings, in which:
- Figure 1 shows a schematic perspective view of a star wheel conveyor according to the invention;
- Figure 2 shows a schematic perspective view of a variant of the star wheel conveyor of Figure 1;
- Figure 3 shows in larger scale a different perspective view of a detail of the star wheel conveyor of Figure 1;
- Figure 4 shows in larger scale a different perspective view of a detail of the star wheel conveyor of Figure 2;
- Figure 5 shows, in even larger scale, a further perspective view of a detail of the star wheel conveyor of Figure 1;
- Figure 6 shows a schematic top view of an engaging member of the star wheel conveyor of Figure 1;
- Figure 7 shows a schematic top view, with certain parts removed for the sake of convenience, of the star wheel conveyor of Figure 1; and
- Figure 8 shows a further schematic top view, with other parts removed for the sake of convenience, of the star wheel conveyor of Figures 1 and 7

### BEST MODE FOR CARRYING OUT THE INVENTION

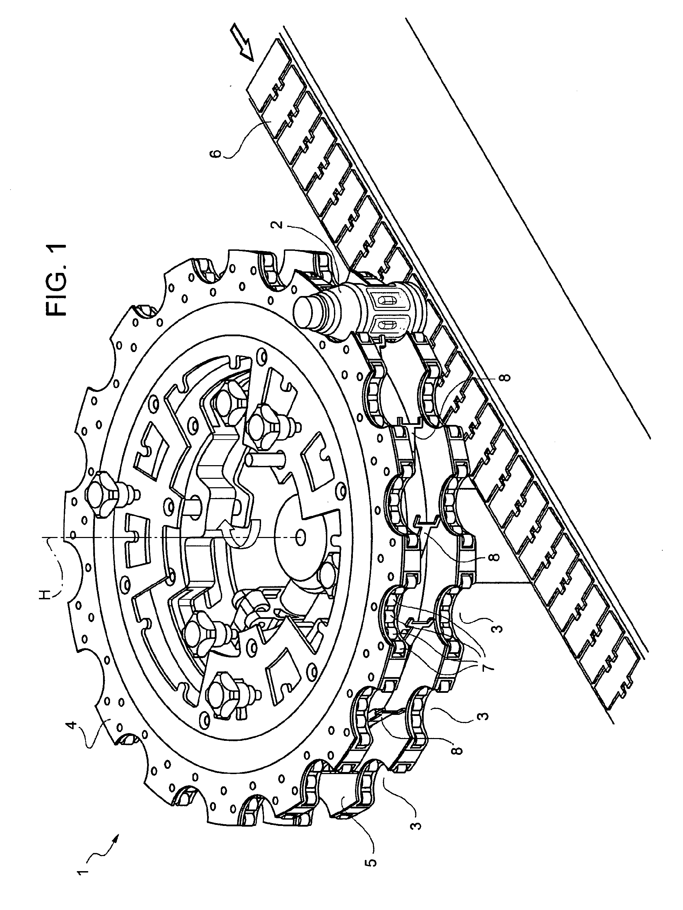

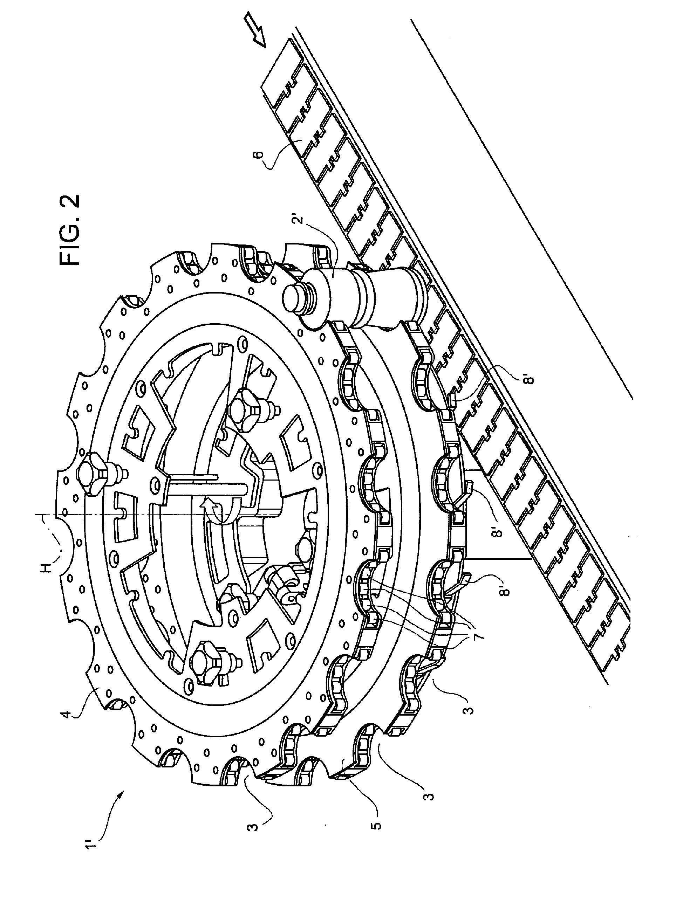

In Figures 1 and 2 numeral 1 indicates as a whole a star wheel conveyor for conveying articles 2, especially containers, on an automated handling line, and more particularly to a star wheel conveyor configured to orient the articles 2 according to predefined alignment conditions which take account of given process requirements.

In particular, star wheel conveyor 1 is substantially disk shaped and defines, at its periphery, a plurality of pockets 3 arranged equally spaced around a central axis H. In greater detail, star wheel conveyor 1 comprises a pair of disk-like plates 4,5 centred on axis H, recesses being provided in the peripheries of disks 4,5 to form pockets 3 for receiving the articles 2 to be handled.

Star wheel conveyor 1 forms part of an automated handling line defining an article path which may comprise a plurality of rectilinear and/or curvilinear sections. By way of example, in the case illustrated in Figures 1 and 2, star wheel conveyor 1 is operatively coupled with a rectilinear conveyor 6, so that an article 2 advancing along the handling line (along article path) is received within a pocket 3 as star wheel conveyor 1 rotates. Upon rotation of star wheel conveyor 1, article 2 is retained within a pocket 3 to be subsequently released at a defined release zone, typically to be delivered to a processing unit or to a further conveyor (not shown). Each article 2 is retained within a respective pocket 3 by being supported between contact surfaces 7 of pocket 3 and a guide rail (not shown) that encircles at least part of the periphery of star wheel disks 4,5.

In the following, reference shall be made in particular to the case where star wheel conveyor 1 forms part of a labelling machine comprising a labelling unit (not shown) to which articles 2 - namely, bottles - need to be supplied in a predetermined angular position, so that the application of labelling material on articles 2 may be not only properly timed with their arrival at the labelling unit, but also in such a way that the dispensing and application of the labelling material at the labelling unit correctly matches any geometric constraint imposed by the shape and ornaments of articles 2, as was briefly discussed above. However, this is not intended to limit the scope of protection of the claims attached, but only to provide one possible example of industrial application for the star wheel conveyor of the invention, which can, nevertheless, be conveniently employed in any other context where articles need to be supplied with a predetermined angular orientation relative to their own axes.

For the purpose of article orientation, each pocket 3 of star wheel conveyor 1 is equipped with an article supporting mechanism of a known type (not shown) configured to hold a respective article 2 while leaving it free to rotate about its axis as it is advanced along article path upon rotation of star wheel conveyor 1. By way of example, when article 2 is a bottle, said mechanism may consist of a means for holding its neck portion. As an alternative, said mechanism may consist of means for holding the bottle body below the neck portion.

Furthermore, each pocket 3 of star wheel conveyor 1 is equipped with at least one engaging member 8 adapted to engage with a corresponding lug or notch 9 in a respective article 2, so that further rotation of article 2 about its axis is prevented upon engagement of engaging member 8 with the lug or notch.

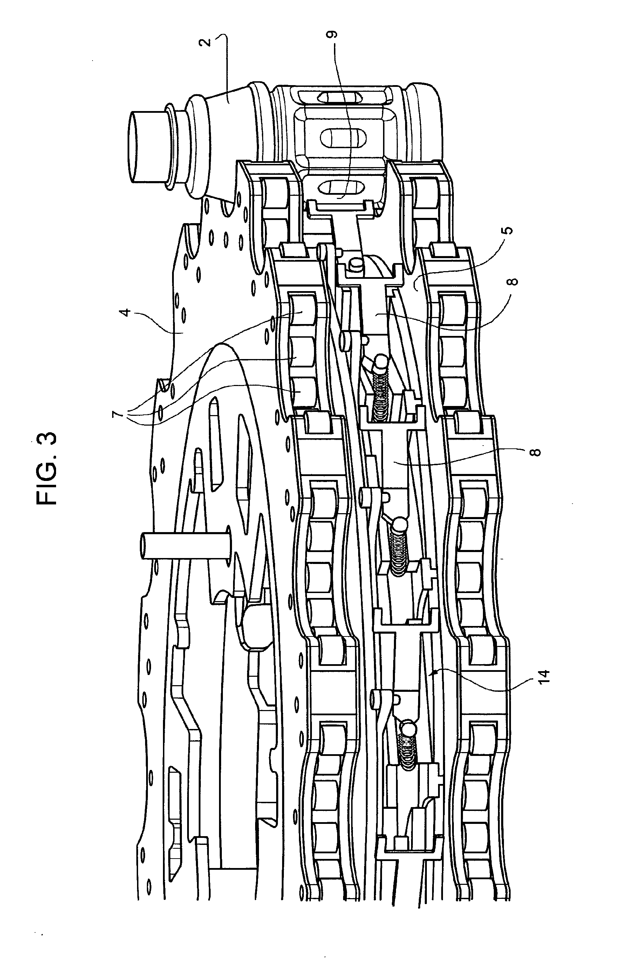

Figures 1, 3 and 5 show, in particular, an embodiment of star wheel conveyor 1 wherein an engaging member 8 is configured and positioned such as to engage with a lug or notch 9 in the lateral surface of article 2. In the specific case illustrated, by way of example, in Figures 1 and 3, article 2 is a bottle with an at least partly non-cylindrical symmetry. In greater detail, at least part of the lateral surface of bottle 2 is defined by substantially flat, indented wall portions, therefore not only dispensing and application of labelling material shall have to be timed with arrival of bottle 2 at a labelling unit, but also it is crucial that application of the labelling material starts from a predetermined area of the lateral surface of bottle 2, e.g. one of the ribs separating two adjacent flat, indented wall portions.

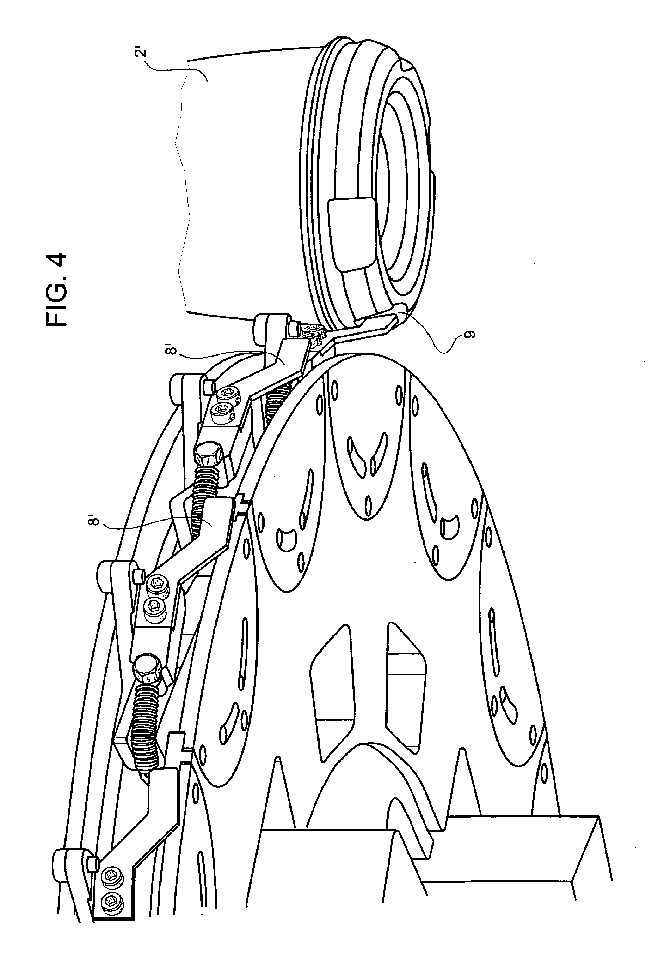

Figures 2 and 4 show, on the other hand, a variant 1' of the star wheel conveyor according to the invention wherein an engaging member 8' is configured and positioned such as to engage with a lug or notch in the bottom portion of an article 2'. In the specific case illustrated, by way of example, in Figures 2 and 4, article 2' is a bottle with one or more notches 9 defined laterally at its bottom. Typically, the lateral surface of bottle 2' bears some ornamental element (not shown) the position of which needs to be taken into account when applying labelling material on its surface, e.g. because the ornamental element needs to be centred relative to the label. The position of notch 9 relative to the ornamental element is chosen such that, upon engagement of engaging member 8' with notch 9, bottle 2 shall reach the labelling unit oriented such that application of the labelling material shall start from a predetermined area of the lateral surface of bottle 2' compatible with a desired aesthetic impression.

In the following, the description will focus in greater detail on the embodiment of Figures 1 and 2, with particular reference to engagement member 8, yet it shall be apparent that operation and features of the embodiment of Figures 3 and 4 with engagement member 8' are substantially equivalent.

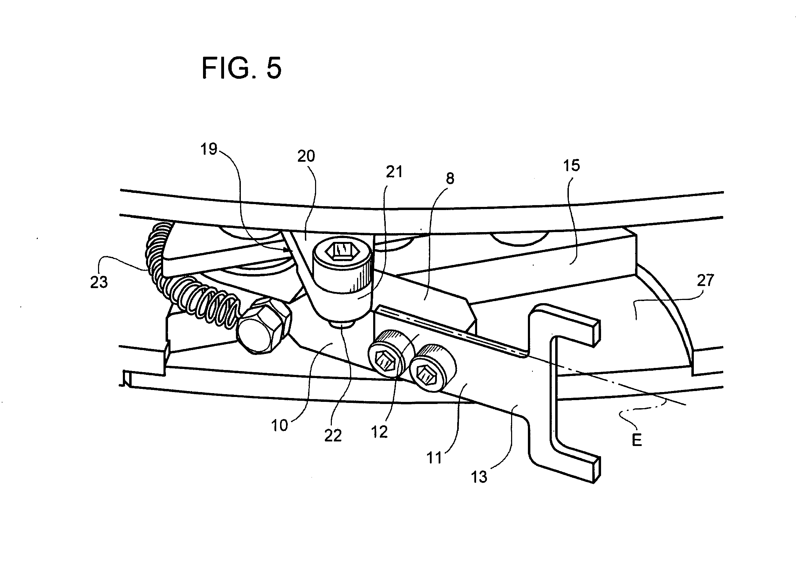

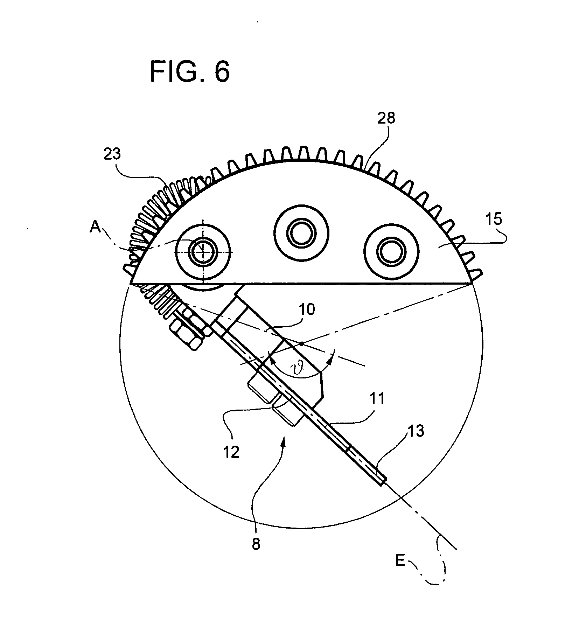

Figures 5 and 6 show larger-scale views of engaging member 8 of star wheel conveyor 1.

Each engaging member 8 of a given pocket 3 comprises a main body 10 fastened, at an end, to star wheel conveyor 1 and a ratchet portion 11 projecting away from star wheel conveyor 1, beyond the periphery of star wheel disks 4,5, along a direction E for engaging, in use, with notch 9 in an article 2 received within said pocket 3.

By way of specific example, in the embodiment illustrated in Figures 5 and 6, ratchet portion 11 comprises a plate 12 releasably fastened at a first end to main body 10 and forming a U-shaped portion 13 at the opposite end, the two prongs of U-shaped portion 13 being designed to engage, in use, with the flat indented wall portions of bottle 2 of Figures 1 and 3.

Advantageously, star wheel conveyor 1 comprises means 14 for adjusting the orientation and/or position of engaging members 8. Preferably, star wheel conveyor 1 comprises means for adjusting the orientation and/or position of all engaging members 8 of star wheel conveyor 1, simultaneously.

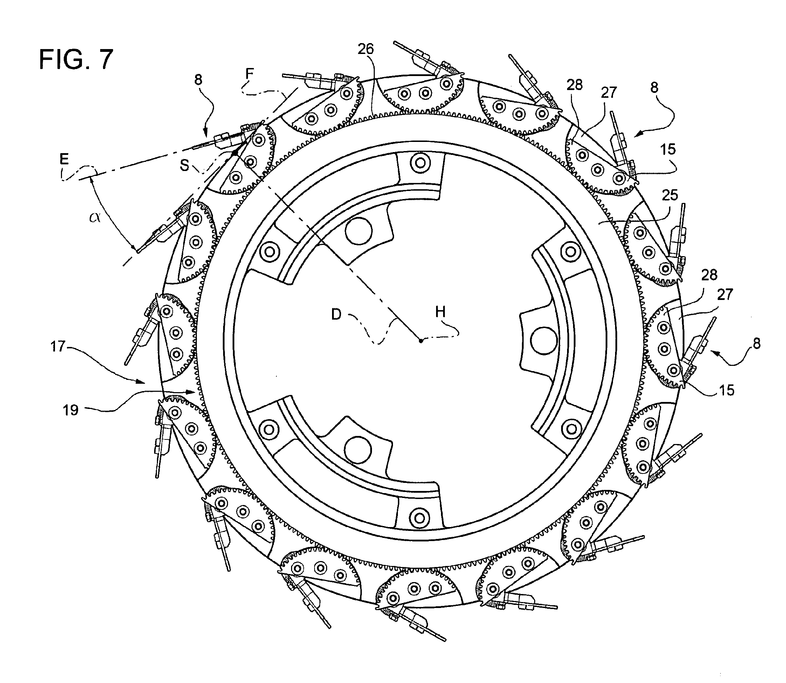

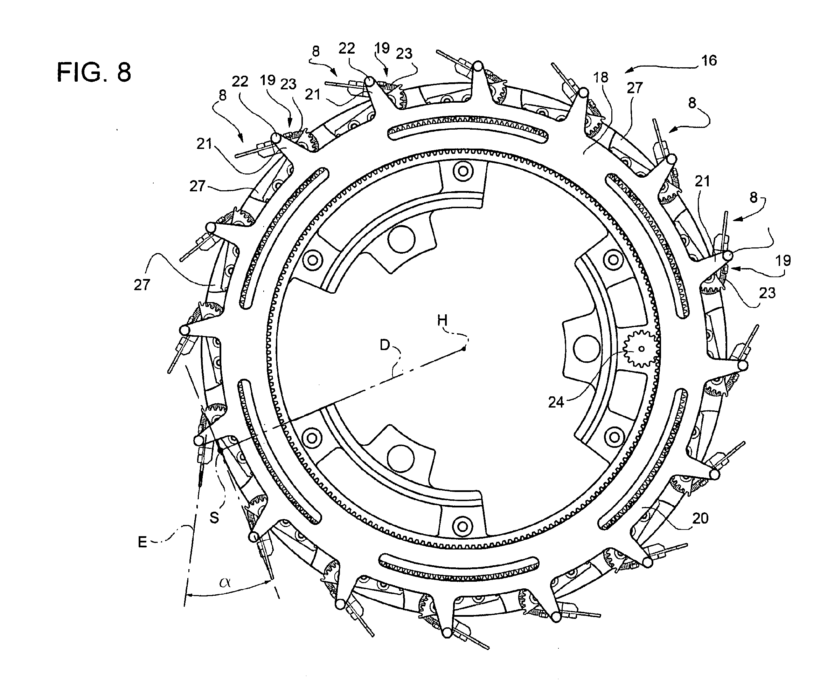

In the context of the present invention, by the expression "orientation of an engaging member" reference is made, in practice, to the angle α formed between direction E along which engaging member 8 projects beyond the periphery of star wheel disks 4,5 and line F tangent to the circle defined by said periphery at the intersection S of said circle with the diameter D substantially bisecting the corresponding pocket 3 (see Figures 7 and 8).

Furthermore, in the context of the present invention, by the expression "position of an engaging member" reference is made, in practice, to the position of the end of main body 10 at which engaging member 8 is fastened to star wheel conveyor 1 relative to central axis H and/or to the diameter D substantially bisecting the corresponding pocket 3.

Advantageously, engaging member 8 may be pivotally fastened to a support element 15 of star wheel conveyor 1, whereby, as engaging member 8 pivots about an axis A substantially parallel to central axis H, orientation of engaging member 8 is varied. Furthermore, means 14 for adjusting the orientation and/or position of engaging members 8 may advantageously comprise a first adjusting system 16 for controlledly pivoting engaging member 8 about pivoting axis A, thereby selectively setting the orientation of engaging member 8.

Support element 15 of star wheel conveyor 1 may advantageously be movable relative to star wheel disks 4,5, between a first and a second end positions, whereby, upon movement of support element 15, the position of engaging member 8 is, in turn, varied.

Furthermore, means 14 for adjusting the orientation and/or position of engaging members 8 may advantageously comprise a second adjusting system 17 for controlledly moving support element 15 relative to star wheel disks 4,5, thereby selectively setting the position of engaging member 8.

Features and operation of first adjusting system 16 shall now be described in greater detail with specific reference to Figures 6 and 8.

First adjusting system 16 comprises an orientation actuator 18 rotatable about central axis H relative to disks 4,5 which define pockets 3, and having, for each engaging member 8, a corresponding portion 19 adapted to cooperate with engaging member 8 so that rotation of orientation actuator 18 about central axis H results in pivoting of said engaging member 8 about the respective axis A.

Preferably, orientation actuator 18 is rotatable about central axis H between a first end position wherein portion 19 cooperates with engaging member 8 so as to hold it in a fully closed configuration, i.e. substantially resting against support element 15, and a second end position wherein portion 19 cooperates with engaging member 8 in a so-called fully open configuration.

In particular, in the embodiment shown in Figure 8, orientation actuator 18 comprises a ring-shaped plate element 20 and a plurality of peripheral arms 21 projecting outwardly from ring-shaped element 20 and carrying respective protuberances 22 adapted to cooperate, e.g. slidably, with corresponding engaging members 8. Each arm 21 with the respective protuberance 22 defines a cooperating portion 19 as mentioned above.

Furthermore, ring-shaped plate element 20 is operatively coupled with a plurality of return spring elements 23 (see, for a better understanding, Figure 6), each of which is fixed, at one end, at main body 10 of an engaging member 8 and, at the opposite end, at the respective support element 15, so that each engaging member 8 is substantially pulled to rest against the respective cooperating portion 19.

In practice, referring to the specific embodiment shown in Figure 8, counter-clockwise rotation of orientation actuator 18 results in engaging members 8 being progressively pivoted towards their closed configuration, where they rest against the respective support elements 15, return spring elements 23 ensuring that the contact between cooperating portions of actuator 19 and engaging members is maintained at all times.

On the other hand, clockwise rotation of orientation actuator 18 enables engaging members 8 to pivot about their axes A substantially biased by the elastic forces of return spring elements 23, controlled and gradual motion of orientation actuator 18 smoothing the transition towards more and more open configurations of engaging members 8.

Preferably, star wheel conveyor 1 comprises means 24 for actuating orientation actuator 18. For example, actuating means 24 may comprise a gearing coupling arranged internally with respect to ring-shaped plate element 20.

Features and operation of second adjusting system 17 shall now be described in greater detail with specific reference to Figures 6 and 7.

Second adjusting system 17 comprises a position actuator 25 rotatable about central axis H relative to disks 4,5 which define pockets 3, and having, at its radially outer periphery, a surface 26 adapted to cooperate with support elements 15 to controlledly move them between their first and second end positions.

In greater detail, in the embodiment illustrated in Figure 7, each support element 15 is substantially shaped as a circular segment and is lodged, rotatable about a respective axis, within a corresponding substantially semicircular seat 27. More particularly, support element 15 has a geared surface 28 extending along an arc defining an angle θ, peripheral surface 26 of position actuator 25 being also geared to engage geared surface 28, whereby rotation of position actuator about central axis H results in rotation of all support elements 15 within the respective seats 27. Accordingly, rotation of position actuator 25 about central axis H causes the displacement of main bodies 10 of engaging members 8, which are fastened to respective support elements 15.

Preferably, position actuator 25 is rotatable between a first and a second end positions corresponding to respective first and second "limit" configurations of engaging member 8. Each of the required adjustments can be effected by a motor, such as a brushless motor, connected directly to the machine PLC.

With reference to Figure 4, arcuate-shaped slots 100 are formed in the seats 27 and are slideably engaged by pins 101 connected to the support element 15. This defineds end stop positions of the support element 15.

Star wheel conveyor 1 may further comprises means (not shown) for actuating position actuator 25.

From a constructional viewpoint, in the embodiment described herein with reference to the Figures, orientation actuator 18 and position actuator 19 are stacked between disks 4, 5, therefore a very compact overall structure is obtained, where access to the different moving parts is convenient for an operator and all adjustment means can be actuated, either manually or automatically, in a straightforward manner.

Furthermore, star wheel conveyor 1 may optionally comprise means (not illustrated in the Figures) for controlledly adjusting the height of engaging members 8 with respect to a plane orthogonal to said central axis H. In practice, star wheel conveyor 1 comprises a frame portion to which engaging member 8 are fastened (e.g. a frame portion carrying support elements 15 described above) and which may optionally be movable, with respect to at least one of disks 4,5 defining pockets 3, parallel to central axis H and between a first and a second operative position. First and second operative positions of said frame portion of star wheel conveyor 1 shall correspond to a lowest and highest setting of engaging members 8. Thus, it becomes possible for star wheel conveyor 1 to further and conveniently adapt to other formats or sizes of articles 2, where the notch/lug 9 is arranged at a higher/lower height.

From the analysis of the features of the star wheel conveyor disclosed above, the advantages which can be obtained are clear.

In particular, by virtue of the star wheel conveyor of the invention, via the independent actuation of first and/or second adjusting systems 16, 17, the orientation and position of engaging member 8 may be finely and easily adjusted to attain the desired alignment of an article 2 in engagement with engaging member 8 as it is conveyed and delivered, by star wheel conveyor 1, to a following processing unit. Above all, orientation and position of engaging member 8 may be quickly and conveniently modified simply by acting upon adjusting systems 16, 17, without the need to replace the whole star wheel conveyor, whenever an article (bottle) with a different format/design needs to be processed.

Furthermore, the fine adjustability made available by the star wheel conveyor 1 of the invention makes it possible for the final user to modify the configuration of a processing (e.g. labelling) machine including the star conveyor, e.g. changing the relative arrangement of star wheel conveyor 1 and of the processing (e.g. labelling) unit to which star conveyor 1 delivers articles 2 for processing, since by acting upon adjusting systems 16, 17 a modified orientation and/or position of engaging members 8 that properly fit, from an operative standpoint, the modified relative arrangement can conveniently be set.

Star wheel conveyor 1 according to the invention is, furthermore, versatile in that it can be used in a configuration where the orientation/position of all engaging members 8 is such that they do not interfere with articles 2 being conveyed, i.e. it may be used with articles 2 which do not require to be supplied to a processing unit with a predetermined alignment.

Finally, it is clear that modifications and variants not departing from the scope of protection of the independent claims can be made to the disclosed and shown method and loading unit.

## Claims

1. An article-orienting star wheel conveyor (1) for conveying articles (2) on an automated handling line and for orienting said articles (2) according to predefined alignment conditions, comprising, at its periphery, a plurality of pockets (3) arranged around a central axis (H) for receiving said articles (2) and a corresponding plurality of supporting mechanisms configured to hold said articles (2) while leaving them free to rotate about their axes, each said pocket (3) being equipped with at least one engaging member (8) adapted to engage with a corresponding lug or notch (9) in a respective article (2), so that further rotation of said article (2) about its axis is prevented upon engagement of engaging member (8) with said lug or notch (9), **characterised by** comprising means (14) for adjusting the orientation and/or position of said engaging members (8).

2. The article-orienting star wheel conveyor according to Claim 1, **characterised in that** said adjusting means (14) are configured to adjust, at once, the orientation and/or position of all said engaging members (8).

3. The article-orienting star wheel conveyor according to Claim 1 or 2, **characterised in that** each said engaging member (8) is pivotally fastened to a support element (15) of said star wheel conveyor (1), whereby, as engaging member (8) pivots about an axis A substantially parallel to said central axis (H), orientation of said engaging member (8) is varied; said adjusting means (14) comprising a first adjusting system (16) for controlledly pivoting engaging member (8) about pivoting axis A, thereby selectively setting the orientation of said engaging member (8).

4. The article-orienting star wheel conveyor according to Claim 3, **characterised in that** said first adjusting system (16) comprises an orientation actuator (18) rotatable about said central axis (H) relative to disks (4,5) of star wheel conveyor (1) which define said pockets (3), and having, for each said engaging member (8), a corresponding portion (19) adapted to cooperate with an engaging member (8) so that rotation of said orientation actuator (18) about said central axis (H) results in pivoting of said an engaging member (8) about said axis (A).

5. The article-orienting star wheel conveyor according to Claim 4, **characterized in that** said orientation actuator (18) is rotatable about said central axis (H) between a first end position, wherein said portion (19) cooperates with said an engaging member (8) so as to hold it substantially resting against said support element (15), and a second end position wherein said portion (19) cooperates with said engaging member (8) in a fully open configuration.

6. The article-orienting star wheel conveyor according to Claim 4 or 5, **characterized in that** said orientation actuator (18) comprises a ring-shaped plate element (20) and a plurality of peripheral arms (21) projecting outwardly from said ring-shaped plate element (20) and carrying respective protuberances (22) adapted to cooperate with corresponding said engaging members (8), each said arm (21) with the respective protuberance (22) defining a said cooperating portion (19); said ring-shaped plate element (20) being operatively coupled with a plurality of return spring elements (23) each of which is fixed, at one end, at one said engaging member (8) and, at the opposite end, at the respective said support element (15), so that each said engaging member (8) is substantially pulled to rest against the respective said cooperating portion (19).

7. The article-orienting star wheel conveyor according to any one of Claims 1 to 6, **characterised in that** each said engaging member (8) is fastened to a support element (15) of said star wheel conveyor (1), said support element (15) being movable, relative to disks (4,5) of star wheel conveyor (1) which define said pockets (3), between a first and a second end positions, whereby, upon movement of said support element (15), the position of a respective said engaging member (8) is, in turn, varied; said adjusting means (14) comprising a second adjusting system (17) for controlledly moving said support element (15) relative to said star wheel disks (4,5) thereby selectively setting the position of said respective engaging member (8).

8. The article-orienting star wheel conveyor according to Claim 7, **characterised in that** second adjusting system (17) comprises a position actuator (25) rotatable about said central axis (H) relative to said disks (4,5) and having, at its radially outer periphery, a surface (26) adapted to cooperate with said support elements (15) to controlledly move them between their first and second end positions.

9. The article-orienting star wheel conveyor according to Claim 8, **characterised in that** each said support element (15) is substantially shaped as a circular segment and is lodged, rotatable about a respective axis (R), within a corresponding substantially semicircular seat (27); each said support element (15) having a geared surface (28) extending along an arc subtending an angle (θ), said peripheral surface (26) of said position actuator (25) being also geared to engage said geared surface (28), whereby rotation of said position actuator (25) about said central axis (H) results in rotation of all said support elements (15) within the respective seats (27).

10. The article-orienting star wheel conveyor according to Claim 8 or 9, **characterised in that** said position actuator (25) is rotatable between a first and a second end positions corresponding to respective first and second "limit" configurations of said engaging members (8).

11. The article-orienting star wheel conveyor according to any one of Claims 1 to 10, further comprising means for controlledly adjusting the height of said engaging members (8) with respect to a plane orthogonal to said central axis (H).

12. The article-orienting star wheel conveyor according to Claim 11, **characterised by** comprising a frame portion to which said engaging member (8) are fastened, said frame portion being movable, with respect to at least a disk-shaped element (4,5) of star wheel conveyor (1) defining said pockets (3), parallel to said central axis (H) and between a first and a second operative positions.

13. A processing machine, comprising a unit for processing articles (2) and a star wheel conveyor according to any one of Claims 1 to 12 for delivering said articles (2) to said processing unit.

14. A labelling machine, comprising a unit for labelling containers (2) and a star wheel conveyor according to any one of Claims 1 to 12 for delivering said containers (2) to said labelling unit.

## Patentansprüche

1. Gegenstände ausrichtender Sternradförderer (1) zur Beförderung von Gegenständen (2) auf einer automatisierten Handhabungsstrecke und zur Ausrichtung der Gegenstände (2) gemäß vorab definierten Ausrichtbedingungen, der an seinem Umfang eine Vielzahl von um eine Mittelachse (H) angeordneten Taschen (3) zur Aufnahme der Gegenstände (2) und eine entsprechende Vielzahl von Stützeinrichtungen aufweist, die konfiguriert sind, die Gegenstände (2) zu halten, während sie frei bleiben, um sich um ihre Achsen zu drehen, wobei jede Tasche (3) mit mindestens einem Eingriffselement (8) ausgestattet ist, das geeignet ist, mit entsprechenden Laschen oder Kerben (9) in einem jeweiligen Gegenstand (2) in Eingriff zu kommen, sodass eine weitere Drehung des Gegenstands (2) um seine Achse nach dem Eingriff zwischen dem Eingriffselement (8) und der Lasche oder der Kerbe (9) verhindert wird, **dadurch gekennzeichnet, dass** er Einrichtungen (14) zur Einstellung der Ausrichtung und/oder Stellung der Eingriffselemente (8) aufweist.

2. Gegenstände ausrichtender Sternradförderer nach Anspruch 1, **dadurch gekennzeichnet, dass** die Einstelleinrichtungen (14) konfiguriert sind, auf einmal die Ausrichtung und/oder Stellung aller Eingriffsbauteile (8) einzustellen.

3. Gegenstände ausrichtender Sternradförderer nach Anspruch 1 oder 2, **dadurch gekennzeichnet, dass** jedes Eingriffsbauteil (8) schwenkbar an einem Stützelement (15) des Sternradförderers (1) befestigt ist, wodurch, wenn das Eingriffsbauteil (8) um eine Achse A im Wesentlichen parallel zur Mittelachse (H) schwenkt, die Ausrichtung des Eingriffsbauteils (8) verändert wird; wobei die Einstelleinrichtungen (14) ein erstes Einstellsystem (16) zum kontrollierten Schwenken des Eingriffsbauteils (8) um die Schwenkachse A aufweisen, wodurch die Ausrichtung des Eingriffsbauteils (8) selektiv festgelegt wird.

4. Gegenstände ausrichtender Sternradförderer nach Anspruch 3, **dadurch gekennzeichnet, dass** das erste Einstellsystem (16) einen Ausrichtungsantrieb (18) aufweist, der um die Mittelachse (H) relativ zu Scheiben (4, 5) des Sternradförderers, welche die Taschen (3) definieren, drehbar ist und für jedes Eingriffsbauteil (8) einen entsprechenden Abschnitt (19) aufweist, der geeignet ist, mit einem Eingriffsbauteil (8) so zusammenzuwirken, dass die Drehung des Ausrichtungsantriebs (18) um die Mittelachse (H) zum Schwenken eines Eingriffsbauteils (8) um die Achse (A) führt.

5. Gegenstände ausrichtender Sternradförderer nach Anspruch 4, **dadurch gekennzeichnet, dass** der Ausrichtungsantrieb (18) zwischen einer ersten Endstellung, in der der Abschnitt (19) mit einem Eingriffsbauteil (8) zusammenwirkt, um es im Wesentlichen gegen das Stützelement (15) angelegt zu halten, und einer zweiten Endstellung um die Mittelachse (H) drehbar ist, in der der Abschnitt (19) mit dem Eingriffsbauteil (8) in einer vollständig geöffneten Konfiguration zusammenwirkt.

6. Gegenstände ausrichtender Sternradförderer nach Anspruch 4 oder 5, **dadurch gekennzeichnet, dass** der Ausrichtungsantrieb (18) ein ringförmiges Plattenelement (20) und eine Vielzahl von Umfangsarmen (21) aufweist, die vom ringförmigen Plattenelement (20) nach außen vorstehen und Vorsprünge (22) tragen, die geeignet sind, mit entsprechenden Eingriffsbauteilen (8) zusammenzuwirken, wobei jeder Arm (21) mit dem entsprechenden Vorsprung (22) einen zusammenwirkenden Abschnitt (19) definiert; wobei das ringförmige Plattenelement (20) mit einer Vielzahl von Rückstellfederelementen (23) in Wirkverbindung steht, von denen jedes an einem Ende an einem Eingriffsbauteil (8) und am gegenüberliegenden Ende am entsprechende Stützelement (15) befestigt ist, sodass jedes Eingriffsbauteil (8) im Wesentlichen gezogen wird, um gegen den zusammenwirkenden Abschnitt (19) anzuliegen.

7. Gegenstände ausrichtender Sternradförderer nach einem der Ansprüche 1 bis 6, **dadurch gekennzeichnet, dass** jedes Eingriffsbauteil (8) an einem Stützelement (15) des Sternradförderers (1) befestigt ist, wobei das Stützelement (15) relativ zu den Taschen (3) definierenden Scheiben (4, 5) des Sternradförderers (1) zwischen einer ersten und einer zweiten Endstellung beweglich ist, wodurch nach der Bewegung des Stützelements (15) die Stellung eines jeweiligen Eingriffsbauteils (8) ihrerseits verändert ist; wobei die Einstelleinrichtungen (14) ein zweites Einstellsystem (17) zur kontrollierten Bewegung des Stützelements (15) bezüglich der Sternradscheiben (4, 5) aufweisen, wodurch die Stellung des jeweiligen Eingriffsbauteils (8) selektiv festgelegt wird.

8. Gegenstände ausrichtender Sternradförderer nach Anspruch 7, **dadurch gekennzeichnet, dass** das zweite Einstellsystem (17) einen Positionsgeber (25) aufweist, der um die Mittelachse (H) bezüglich der Scheiben (4, 5) drehbar ist und an seinem radial äußeren Umfang eine Fläche (26) hat, die geeignet ist, mit den Stützelementen (15) zusammenzuwirken, um sie kontrolliert zwischen ihrer ersten und ihrer zweiten Endstellung zu bewegen.

9. Gegenstände ausrichtender Sternradförderer nach Anspruch 8, **dadurch gekennzeichnet, dass** jedes Stützelement (15) im Wesentlichen wie ein Kreissegment geformt und um eine Achse (R) drehbar in einem entsprechenden im Wesentlichen halbkreisförmigen Sitz (27) untergebracht ist; wobei jedes Stützelement (15) eine gezahnte Fläche (28) hat, die sich entlang eines einen Winkel (θ) einschließenden Bogens erstreckt, wobei die Umfangsfläche (26) des Stellungsantriebs (25) auch gezahnt ist, um in die gezahnte Fläche (28) einzugreifen, wodurch die Drehung des Stellungsantriebs (25) um die Mittelachse (H) zur Drehung aller Stützelemente (15) innerhalb der jeweiligen Sitze (27) führt.

10. Gegenstände ausrichtender Sternradförderer nach Anspruch 8 oder 9, **dadurch gekennzeichnet, dass** der Positionsgeber (25) zwischen einer ersten und einer zweiten Endstellung drehbar ist, die ersten bzw. zweiten "Grenz"-Konfigurationen der Eingriffsbauteile (8) entsprechen.

11. Gegenstände ausrichtender Sternradförderer nach einem der Ansprüche 1 bis 10, der weiter Einrichtungen zur kontrollierten Einstellung der Höhe der Eingriffsbauteile (8) bezüglich einer Ebene orthogonal zur Mittelachse (H) aufweist.

12. Gegenstände ausrichtender Sternradförderer nach Anspruch 11, **dadurch gekennzeichnet, dass** er einen Rahmenteil aufweist, an dem die Eingriffsbauteile (8) befestigt sind, wobei der Rahmenteil bezüglich mindestens eines die Taschen (3) definierenden scheibenförmigen Elements (4, 5) des Sternradförderers (1) parallel zur Mittelachse (H) und zwischen einer ersten und einer zweiten Betriebsstellung beweglich ist.

13. Verarbeitungsmaschine, die eine Einheit zur Verarbeitung von Gegenständen (2) und einen Sternradförderer nach einem der Ansprüche 1 bis 12 zum Liefern der Gegenstände (2) an die Verarbeitungseinheit aufweist.

14. Etikettiermaschine, die eine Einheit zum Etikettieren von Behältern (2) und einen Sternradförderer nach einem der Ansprüche 1 bis 12 zum Liefern der Behälter (2) an die Etikettiereinheit aufweist.

## Revendications

1. Convoyeur à roue en étoile avec orientation de l'article (1) pour le convoyage d'articles (2) sur une ligne de manipulation automatisée et pour l'orientation desdits articles (2) selon des conditions d'alignement prédéfinies, comprenant, sur sa périphérie, une pluralité de poches (3) agencées autour d'un axe central (H) pour recevoir lesdits articles (2) et une pluralité de mécanismes de support correspondante configurée pour maintenir lesdits articles (2) tout en les laissant libres de tourner autour de leurs axes, chaque dite poche (3) étant équipée d'au moins un élément d'engagement (8) adapté pour s'engager avec une anse ou une encoche correspondante (9) dans un article respectif (2) de sorte qu'une autre rotation dudit article (2) autour de son axe soit évitée suite à l'engagement de l'élément d'engagement (8) avec ladite anse ou l'encoche (9), **caractérisé en ce qu'**il comprend des moyens (14) pour l'ajustement de l'orientation et/ou la position desdits éléments d'engagement (8).

2. Convoyeur à roue en étoile avec orientation de l'article selon la revendication 1, **caractérisé en ce que** lesdits moyens d'ajustement (14) sont configurés pour ajuster immédiatement l'orientation et/ou la position de tous lesdits éléments d'engagement (8).

3. Convoyeur à roue en étoile avec orientation de l'article selon la revendication 1 ou 2, **caractérisé en ce que** chaque dit élément d'engagement (8) est fixé de façon pivotante sur un élément de support (15) dudit convoyeur à roue en étoile (1), moyennant quoi lorsque l'élément d'engagement (8) pivote autour d'un axe A sensiblement parallèlement audit axe central (H), l'orientation dudit élément d'engagement (8) varie ; lesdits moyens d'ajustement (14) comprenant un premier système d'ajustement (16) pour le pivotement contrôlé de l'élément d'engagement (8) autour de l'axe de pivotement A, définissant sélectivement par là même l'orientation dudit élément d'engagement (8).

4. Convoyeur à roue en étoile avec orientation de l'article selon la revendication 3, **caractérisé en ce que** ledit premier système d'ajustement (16) comprend un actionneur d'orientation (18) rotatif autour dudit axe central (H) par rapport aux disques (4, 5) du convoyeur à roue en étoile (1) qui définissent lesdites poches (3) et présentant, pour chacun desdits éléments d'engagements (8), une partie correspondante (19) adaptée pour coopérer avec un élément d'engagement (8) de sorte que la rotation dudit actionneur d'orientation (18) autour dudit axe central (H) résulte dans le pivotement dudit un élément d'engagement (8) autour dudit axe (A).

5. Convoyeur à roue en étoile avec orientation de l'article selon la revendication 4, **caractérisé en ce que** ledit actionneur d'orientation (18) est rotatif autour dudit axe central (H) entre une première position d'extrémité, dans laquelle ladite partie (19) coopère avec ledit un élément d'engagement (8) de sorte à le maintenir reposant sensiblement contre ledit élément de support (15), et une seconde position d'extrémité, dans laquelle ladite partie (19) coopère avec ledit élément d'engagement (8) dans une configuration pleinement ouverte.

6. Convoyeur à roue en étoile avec orientation des articles selon la revendication 4 ou 5, **caractérisé en ce que** ledit actionneur d'orientation (18) comprend un élément de plaque annulaire (20) et une pluralité de bras périphériques (21) faisant saillie vers l'extérieur dudit élément de plaque annulaire (20) et portant des saillies respectives (22) adaptées pour coopérer avec desdits éléments d'engagement (8) correspondants, chaque dit bras (21) avec la saillie respective (22) définissant une dite partie de coopération (19); ledit élément de plaque annulaire (20) étant couplé en fonctionnement avec une pluralité d'éléments de ressort de rappel (23), dont chacun est fixé sur une extrémité sur un dit élément d'engagement (8) et sur l'extrémité opposée, sur ledit élément de support respectif (15) de sorte que chaque dit élément d'engagement (8) soit sensiblement tiré pour reposer contre ladite partie de coopération respective (19).

7. Convoyeur à roue en étoile avec orientation des articles selon l'une quelconque des revendications 1 à 6, **caractérisé en ce que** chaque dit élément d'engagement (8) est fixé à un élément de support (15) dudit convoyeur à roue en étoile (1), ledit élément de support (15) étant mobile par rapport aux disques (4, 5) du convoyeur à roue en étoile (1) qui définissent lesdites poches (3), entre une première position et une seconde position d'extrémité, moyennant quoi suite au mouvement dudit élément de support (15), la position d'un dit élément d'engagement respectif (8) est à son tour variée ; lesdits moyens d'ajustement (14) comprenant un second système d'ajustement (17) pour le déplacement contrôlé dudit élément de support (15) par rapport auxdits disques de roue en étoile (4, 5) définissant par là même sélectivement la position dudit élément d'engagement respectif (8).

8. Convoyeur à roue en étoile avec orientation des articles selon la revendication 7, **caractérisé en ce que** le second système d'ajustement (17) comprend un actionneur de position (25) rotatif autour dudit axe central (H) par rapport auxdits disques (4, 5) et ayant sur sa périphérie radialement extérieure une surface (26) adaptée pour coopérer avec lesdits éléments de support (15) pour les déplacer de manière contrôlée entre leur première et seconde positions d'extrémité.

9. Convoyeur à roue en étoile avec orientation des articles selon la revendication 8, **caractérisé en ce que** chaque dit élément de support (15) est sensiblement de la forme d'un segment circulaire et est logé de manière rotative autour d'un axe respectif (R), dans un siège sensiblement semi-circulaire correspondant (27) ; chaque dit élément de support (15) présentant une surface à engrenage (28) s'étendant le long d'un arc sous-tendant un angle (θ), ladite surface périphérique (26) dudit actionneur de position (25) étant aussi à engrenage pour engager ladite surface à engrenage (28), moyennant quoi la rotation dudit actionneur de position (25) autour dudit axe central (H) résulte en la rotation de tous les éléments de support (15) dans les sièges respectifs (27).

10. Convoyeur à roue en étoile avec orientation des articles selon la revendication 8 ou 9, **caractérisé en ce que** ledit actionneur de position (25) est rotatif entre une première et une seconde positions d'extrémité correspondant aux première et seconde configurations « limites » respectives desdits éléments d'engagement (8).

11. Convoyeur à roue en étoile avec orientation des articles selon l'une quelconque des revendications 1 à 10, comprenant en outre des moyens pour l'ajustement contrôlé de la hauteur desdits éléments d'engagement (8) par rapport à un plan orthogonal audit axe central (H).

12. Convoyeur à roue en étoile avec orientation des articles selon la revendication 11, **caractérisé en ce qu'**il comprend une partie de cadre, à laquelle ledit élément d'engagement (8) est fixé, ladite partie de cadre étant mobile par rapport à au moins un élément de disque (4, 5) du convoyeur à roue en étoile (1) définissant lesdites poches (3) parallèlement audit axe central (H) et entre une première et une seconde positions opérationnelles.

13. Machine de traitement comprenant une unité pour le traitement d'articles (2) et un convoyeur à roue en étoile selon l'une quelconque des revendications 1 à 12 pour la fourniture desdits articles (2) à ladite unité de traitement.

14. Etiqueteuse, comprenant une unité pour étiqueter des contenants (2) et un convoyeur à roue en étoile selon l'une quelconque des revendications 1 à 12 pour fournir lesdits contenants (2) à ladite unité d'étiquetage.
